(19) Europäisches Patentamt
European Patent Office
Office européen des brevets

(11) EP 0 805 971 B1

(12) **EUROPÄISCHE PATENTSCHRIFT**

(45) Veröffentlichungstag und Bekanntmachung des Hinweises auf die Patenterteilung:
**23.09.1998 Patentblatt 1998/39**

(21) Anmeldenummer: **95937861.3**

(22) Anmeldetag: **03.11.1995**

(51) Int Cl.$^6$: **G01N 27/00**, G01N 29/02

(86) Internationale Anmeldenummer:
**PCT/EP95/04315**

(87) Internationale Veröffentlichungsnummer:
**WO 96/14573 (17.05.1996 Gazette 1996/22)**

(54) **POLYMER-SENSOR**
POLYMER SENSOR
CAPTEUR POLYMERE

(84) Benannte Vertragsstaaten:
**DE FR GB**

(30) Priorität: **07.11.1994 DE 4439765**
**09.11.1994 DE 4440020**
**15.03.1995 DE 19509296**

(43) Veröffentlichungstag der Anmeldung:
**12.11.1997 Patentblatt 1997/46**

(73) Patentinhaber: **Ticona GmbH**
**65926 Frankfurt am Main (DE)**

(72) Erfinder:
- **SCHÖNFELD, Axel**
**D-65207 Wiesbaden (DE)**
- **FEUCHT, Gernot**
**D-67112 Mutterstadt (DE)**
- **SCHLEICHER, Andreas**
**D-65614 Beselich (DE)**
- **FRANK, Georg**
**D-72074 Tübingen (DE)**
- **RIEGER, Heinz-Joachim**
**D-65817 Eppstein (DE)**

(56) Entgegenhaltungen:
**US-A- 3 327 519**

- **THIN SOLID FILMS, Bd. 210/211, Nr. 1/2, 15.April 1992 LAUSANNE, CH, Seiten 368-371, XP 000360127 I. VIKHOLM 'LANGMUIR-BLODGETT FILMS OF HEXADECYLVINYLBENZYLDIMETHYLAMMONIUM CHLORIDE AND THEIR OZONE SENSITIVITY'**
- **REVIEW OF SCIENTIFIC INTRUMENTS, Bd. 62, Nr. 6, 30.Juni 1991 NEW YORK, US, Seiten 1630-1632, XP 000235657 J. T. KUCERA 'DETECTION OF OZONE USING A SILVER COATED QUARTZ CRYSTAL RATE MONITOR'**
- **ANALYTICAL CHEMISTRY, Bd. 57, Nr. 11, 30.November 1985 WASHINGTON, US, Seiten 2634-2638, H. FOG 'PIEZOELECTRIC CRYSTAL DETECTOR FOR THE MONITORING OF OZONE IN WORKING ENVIRONMENTS' in der Anmeldung erwähnt**
- **SENSORS AND ACTUATORS B CHEMICAL, Bd. B16, Nr. 1/3, 31.Okfober 1993 LAUSANNE, CH, Seiten 312-316, XP 000411357 R. ZOU 'NOX SENSITIVITY OF MONOMERIC AND POLYMERIC N-MACROCYCLIC COMPOUNDS'**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 805 971 B1

Printed by Jouve, 75001 PARIS (FR)

## Beschreibung

Die Erfindung beschreibt einen Sensor zum Nachweis von Oxidantien wie Stickoxide ($NO_x$), Stickstoffdioxid ($NO_2$), Ozon oder Persäuren, wobei der Sensor ein oxidierbares aromatisches Polymer wie einen Polyarylenether oder Polyarylenthioether als aktiven Bestandteil enthält.

Es ist bekannt (Analyt. Chem., 57(13), 2634-8, 1985), daß Ozon mit einem piezoelektrischen, mit 1,4-Polybutadien beschichteten Sensor nachgewiesen werden kann. Problematisch am hier vorgestellten Verfahren sind die Herstellung des Polymerüberzugs durch Auftragen mit einer Bürste. Dabei kann die Oberfläche der Kontaktierung verletzt werden. Die Homogenität der Schicht kann durch dieses Verfahren ebenfalls nicht reproduzierbar sein, was durch den angegebenen Frequenzänderungsbereich (2000 bis 10000) Hz bestätigt wird. Weiter sind die beobachteten Frequenzänderungen durch die beaufschlagten Ozonmengen im ppb-Bereich so klein, daß sie in der Größenordnung des Rauschens der Eigenfrequenz des Piezokristalls liegen (3 bis 30 Hz). Ferner entstehen bei der Reaktion des Ozons mit dem 1,4-Polybutadien niedermolekulare Verbindungen, die sich partiell verflüchtigen können. Dies führt zu einer entgegengesetzten Massenänderung und somit zu einem Fehler in der Konzentrationsbestimmung des Gases.

Weiterhin ist eine Detektion von $NO_2$ im Sub-ppm-Bereich in Mischung mit reinem Stickstoff beschrieben worden, bei der eine duale Anordnung von Quarz-SAW-Bauteilen (SAW = surface acoustive wave) mit einer Resonanzfrequenz von 600 MHz eingesetzt wird (M. Rapp et. al., Sensors Actuators B 1991, 103-108). Als Beschichtungsmaterialien benutzt man ultradünne Schichten (1 bis 15 nm) von Blei- und Eisen-phathalocyanin-Derivaten, aufgetragen durch Bedampfung oder mit der Langmuir-Blodgett-Technik. Beispielsweise ermöglichen Blei-phthalocyanin-Filme von 15 nm Dicke innerhalb einer Ansprechzeit von wenigen Minuten eine Erfassungsgrenze von 5 ppb für $NO_2$.

Es ist ferner bekannt, daß elektronische Frequenzgeneratoren zur Schwingungserzeugung ein piezoelektrisches Element aus Quarz oder PZT-Keramik nutzen. Eine der Resonanzfrequenzen wird zur Detektion von Massenänderungen ausgewählt und vom zugeschalteten externen Frequenzgenerator verstärkt, wobei es sich im Frequenzbereich bis ca. 20 MHz um die Grundschwingung handelt, die dabei resonant angeregt wird.

Bei Piezoelektrika gilt für die Frequenzänderung $\Delta f$ die folgende Funktion (Sauerbrey-Gleichung):

$$\Delta f = - 2,3 * 10^6 * F^2 * \Delta m / A$$

wobei A die schwingende Fläche, F die Grundschwingung und $\Delta m$ die Massenänderung darstellt.
Wird eine schwingende Fläche (z.B. eine Quarzscheibe) mit einem Überzug versehen, so ändert sich die Frequenz des Sensor-Systems aufgrund der Massenzunahme.

Hat der Überzug absorbierende Eigenschaften bezüglich einer oder mehrerer Stoffe im Umgebungsmedium, reagiert das schwingende System mit einer Frequenzänderung auf eine stattfindende Absorption. Die Eigenschaften des Sensors (Selektivität, Empfindlichkeit, Regenerierbarkeit, Kumulierbarkeit) können durch entsprechende Auswahl des Absorbers in weiten Grenzen eingestellt werden.

Dabei ist jedoch zu beachten, daß die Schwingungseigenschaften der Piezoelektrika durch den Überzug nicht beeinträchtigt werden dürfen. Ferner darf der Absorber nicht unter Bildung flüchtiger Substanzen mit den zu detektierenden Stoffen reagieren. Für einen sinnvollen Einsatz ist weiterhin eine schnelle Umsetzung mit dem zu detektierenden Material notwendig.

Die Schwingungsfähigkeit des Piezokristalls geht im allgemeinen verloren, wenn der aufgebrachte Absorber auf dem Piezokristall kristalliner oder teilkristalliner Natur ist. Eine Vorhersage ist aber in keinem Fall möglich. Auch bei der Verwendung von organischen Substanzen können die benötigten Eigenschaften im allgemeinen nicht zuverlässig exakt eingestellt werden. Die Auswahl der einzusetzenden Substanz ist daher mehr oder weniger empirisch.

Aufgabe der Erfindung ist es, die genannten Nachteile zu umgehen und einen einfachen und zuverlässigen Sensor für den Nachweis von Oxidantien wie Ozon, Stickoxide ($NO_x$), Stickstoffdioxid ($NO_2$), Wasserstoffperoxid oder Persäuren bereitzustellen.

Durch den Einsatz von oxidierbaren aromatischen Polymeren wie Polyarylenether oder Polyarylenthioether bei Sensoren ist es möglich Sensoren z.B. für Ozon, Stickstoffdioxid oder andere starke Oxidantien mit hoher Auflösung und Selektivität zu erhalten.

Gegenstand der Erfindung ist ein Sensor für Oxidantien, wobei der Sensor ein oxidierbares aromatisches Polymer enthält.

Oxidierbare aromatische Polymere sind aromatische Polymere, die durch Oxidantien oxidierbare Gruppen wie Sulfidbrücken, Aminogruppen, Diazogruppen, ungesättigte Bindungen, Alkylgruppen oder olefinische Seitengruppen, enthalten, die durch die Oxidantien oxidiert werden können.

Bevorzugte oxidierbare aromatische Polymere sind Polyarylenether oder Polyarylenthioether.

Polyarylenether sind Polymere, die über ein Sauerstoffatom verbrückte aromatische Einheiten enthalten. Polyarylenether werden auch als Polyarylenoxide bezeichnet. Polyarylenoxide werden beispielsweise in Ullmann's Encyclopedia of Industrial Chemistry, 5. Auflage, Vol. A21, VCH Publishers, Weinheim 1992, S. 605-614, Stichwort 'Poly (Phenylene Oxides), beschrieben, worauf Bezug genommen wird.

Polyarylenthioether, auch Polyarylensulfid genannt, sind Polymere; die über ein Schwefelatom verbrückte aromatische Einheiten enthalten. Polyarylenthioether werden beispielsweise in Ullmann's Encyclopedia of Industrial Chemistry, 5. Auflage, Vol. A21, VCH Publishers, Weinheim 1992, S. 463-471, Stichwort: Polymers, High-Temperature-5. Poly(Phenylene sulfide), beschrieben, worauf Bezug genommen wird. Sulfongruppenhaltige Polyarylenthioether und deren Herstellung werden in Chimia 28 (1974), 567 beschrieben.

Das oxidierbare aromatische Polymer wird auch im folgenden einfach als Polymer bezeichnet. Oxidantien oder Oxidationsmittel sind beispielsweise Ozon, Stickstoffdioxid ($NO_2$), Stickoxide ($NO_x$), Wasserstoffperoxid ($H_2O_2$), anorganische oder organische Peroxide oder Persäuren wie Peressigsäure.

Oxidierbare aromatische Polymere sind beispielsweise substituierte Polyarylene mit wiederkehrenden Einheiten der allgemeinen Formel (I),

$$-[(Ar^1)_n-X)]_m-[(Ar^2)_i-Y)]_j-[(Ar^3)_k-Z)]_l-[(Ar^4)_o-W)]_p- \qquad (I)$$

wobei $Ar^1$, $Ar^2$, $Ar^3$, $Ar^4$, W, X, Y und Z unabhängig voneinander gleich oder verschieden sind. Die Indizes n, m, i, j, k, l, o und p sind unabhängig voneinander Null oder ganze Zahlen 1, 2, 3 oder 4, wobei ihre Summe mindestens 2 ergeben muß, $Ar^1$, $Ar^2$, $Ar^3$ und $Ar^4$ stehen in der Formel (I) für o-substituierte und unsubstituierte Arylensysteme mit 6 bis 18 C-Atomen, W, X, Y und Z stellen zweiwertige Verknüpfungsgruppen dar, ausgewählt aus $-SO_2-$, -S-, -SO-, -CO-, -O-, $-CO_2-$, Alkylen- oder Alkylidengruppen mit 1 bis 6, vorzugsweise 1 bis 4 C-Atomen, wobei mindestens eine der Verknüpfungsgruppen W, X, Y oder Z eine Etherbrücke sein muß.

Als Substituenten am Arylring werden bevorzugt $CH_3$, $C_2H_5$, $CH(CH_3)_2$, $C(CH_3)_3$, $C_6H_5$, $OCH_3$, Cl,$CH_3C_6H_5$, 3-$CH_3C_5H_4$, 4-$CH_3C_6H_4$, 4-$(CH_3)_3C_6H_4$, 2-Naphthyl eingesetzt. Neben den eben genannten Substituenten können zusätzlich die restlichen Wasserstoffatome der Arylsysteme unabhängig voneinander auch durch andere Substituenten wie Halogen, Amino-, Nitro- oder Hydroxigruppen ersetzt werden. Ferner können Blockcopolymere, die aus Einheiten der Formel (I) aufgebaut sind, eingesetzt werden.

Bevorzugte Polyarylenether gemäß Formel (I) sind Polyarylenoxide mit Wiederholungseinheiten der Formel (II)

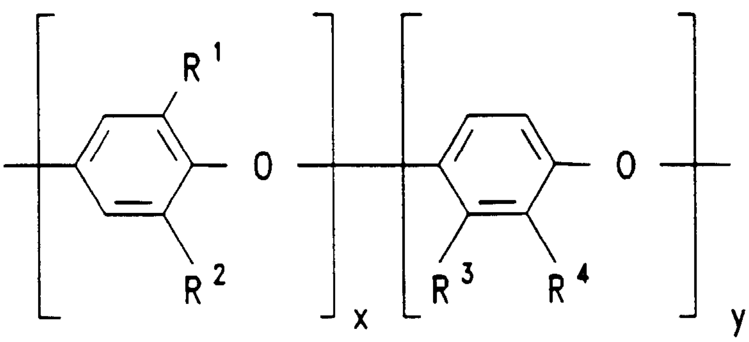

(II)

wobei die Summe aus x und y 1 sein muß und wobei jeweils Null < x < 1 und Null < y < 1 ist, und x = Null ist, wenn y = 1 ist und umgekehrt. $R^1$, $R^2$, $R^3$ und $R^4$ sind dabei ausgewählt aus Wasserstoff, $CH_3$, $C_2H_5$, $CH(CH_3)_2$, $C(CH_3)_3$, $C_6H_5$, $OCH_3$, Cl, $CH_2C_6H_5$, 3-$CH_3C_6H_4$, 4-$CH_3C_6H_4$, 4-$(CH_3)_3C_6H_4$, 2-Naphthyl. $R^1$ bis $R^4$ können dabei gleich oder verschieden sein.

Weiter sind auch Polymermischungen aus Polyarylenethern der Formel (II) und Polystyrol oder Polystyrol/Styrol Mischungen einsetzbar (Ullmann's Encyclopedia of Ind. Chemistry Vol. A21, VCH Publishers Inc., New York, 1992).

Ferner können Polyamid/Polyarylenoxid- oder Polyolefin/Polyarylenoxid-Mischungen eingesetzt werden. Der Gehalt der Polymere nach Formel (II) beträgt in den Mischungen 5 bis 99 %, vorzugsweise 10 bis 99 % und 15 bis 99 %.

Besonders bevorzugt als Polyarylenether ist Poly-para[2,6-Dimethylphenylenoxid] (PPO) mit Einheiten der Formel (III)

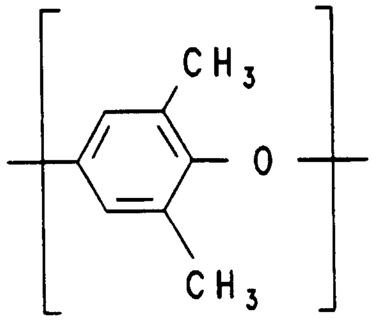

(III)

(US-A-3 306 874) oder eine Polymermischung aus (PPO) und Polystyrol oder Polystyrol/Styrol, die kommerziell erhältlich sind.

Bevorzugte Polyarylenthioether sind Polyphenylensulfide (PPS) mit der wiederkehrenden Einheit $-C_6H_4-S-$.

Polyarylensulfid (PAS) oder PPS kann auch bis zu einem Anteil von 50 Molprozent eine 1,2- und/oder eine 1,3-Verknüpfung am aromatischen Kern aufweisen. Unter PAS oder PPS ist sowohl das lineare als auch das verzweigte oder vernetzte Material zu verstehen. Ferner kann das PAS oder PPS pro Aryleneinheit unabhängig voneinander zwischen 1 und 4 funktionelle Gruppen enthalten, z.B. Alkylreste, Halogene, Sulfonsäure-, Amino-, Nitro-, Cyano-, Hydroxy- oder Carboxygruppen.

Im allgemeinen sind Polymere wie Polyarylenether oder Polyarylenthioether geeignet, die ein mittleres Molekulargewicht $M_w$ von 2 000 bis 2 000 000, vorzugsweise von 10 000 bis 500 000, insbesondere 10 000 bis 100 000, bestimmt durch GPC, aufweisen.

Es können solche Kristalle von anorganischen oder organischen Substanzen verwendet werden, die den piezoelektrischen Effekt zeigen.

Bevorzugt sind Erdalkalititanate, Blei/Zirkoniumtitanate und Quarze, insbesondere Bariumtitanat und Quarz im AT-Schnitt, bei denen die piezoelektrischen Eigenschaften eine besonders geringe Temperaturabhängigkeit aufweisen.

Im allgemeinen weisen die eingesetzten Piezokristalle eine Grundschwingung in einem Frequenzbereich von 20 kHz bis 100 MHz, bevorzugt von 0,1 MHz bis 50 MHz und insbesondere von 0,1 MHz bis 30 MHz auf.

Wird der Schwingquarz nach der SAW-Methode (SAW = surfache acustic wave) (W. Göpel et al.: Sensors - A Comprehensive Survey, VCH, Weinheim, Deutschland) ausgewertet, so können piezoelektrische Kristalle verwendet werden, deren Oberflächenschwingungen im Frequenzbereich von 20 kHz bis 1000 MHz liegen.

Als Sensor eignen sich beispielsweise piezoelektrische Kristalle, die mit einer Beschichtung versehen sind, die mindestens ein oxidierbares aromatisches Polymer enthält.

Das eingesetze Polymer oder die Polymermischung kann über allgemeine Beschichtungsverfahren auf die Piezokristalle einseitig oder beidseitig aufgebracht werden. Bevorzugt sind dabei Beschichtungsverfahren, die auf Polymer- oder Monomerlösungen basieren, z.B. Spincoating, Dipcoating oder Sprühverfahen. Dabei sind alle organischen Substanzen geeignet, die das jeweilige Polymer oder Monomer in einem definierten Temperaturintervall lösen. Polyarylenether werden beispielsweise in Chloroform gelöst. Für das Lösen von Polyarylensulfiden eignen sich beispielsweise Caprolactam, 2,4,6-Trichlorphenol, vorzugsweise Isochinolin, 1-Methoxy-Napthalin und 1-Chlornaphthalin. Bei der Verwendung von Monomerlösung kann die Polymerisation durch allgemeine Oberflächenpolymerisationstechniken wie Laserinduktion oder Temperaturerhöhung durchgeführt werden.

Die Haftung der Beschichtung auf einer Sensorberfläche kann durch Aufbringen einer adhäsiven Zwischenschicht verbessert werden. Die adhäsive Zwischenschicht besteht aus oder enthält ein Polymer mit olefinischen Seitengruppen wie Polybutadien oder Polyisopren, Polyacrylat, Polymethacrylat oder Polystyrol.

Gemäß der Erfindung erfolgt die Nachbehandlung der aufgebrachten Polymerschicht durch Trocknung in handelsüblichen Trocknungsanlagen an Luft in Schutzgas oder unter verminderten Druck bei Temperaturen von 0 bis 350°C, bevorzugt 30 bis 300°C und insbesondere von 50 bis 300°C. Es ist auch möglich, zur Erzielung dickerer Polymerschichten mehrere Belegungs- und Trockungsschritte iterativ zu wiederholen.

Die Belegung des verwendeten Piezokristalls nach der Trocknung liegt bei 1 $ng/cm^2$ bis 1 $mg/cm^2$, bevorzugt 5 $ng/cm^2$ bis 10 $mg/cm^2$ und insbesondere bei 10 $ng/cm^2$ bis 2 $mg/cm^2$.

Der piezoelektrische Sensor wird in einer Durchflußzelle mit definiertem Volumenstrom dem zu prüfenden Gas ausgesetzt. Die Sensorfrequenz wird entweder direkt ausgewertet oder mit einer stabilisierten Referenzfrequenz gemischt und dann ausgewertet (Auftragung der Frequenz oder der Frequenzänderung gegen die Zeit). Die Signaländerung kann durch nachgeschaltete Prozessoren direkt in Massenänderungen umgerechnet und auf einer Anzeige sichtbar gemacht werden.

Die Reaktion des Sensors auf Stickstoffmonoxid (NO) ist gering. Sie läßt sich jedoch verbessern , wenn der zu

untersuchende Gasstrom vor der Überleitung über den Sensor durch eine oxidativ wirkende anorganische bzw. organische Verbindung geleitet wird, die ein Redoxpotential von mindestens 0,96 V gegen Standardwasserstoffelektrode (SHE) aufweist, beispielsweise Chlorkalk, Natriumhypochlorit, Vanadinpentoxid oder Dichlordicyanochinon. Diese überführen das NO in $NO_2$, auf das der Sensor mit hoher Auflösung reagiert.

Es ist auch möglich, NO und $NO_2$ nebeneinander in einem Gasgemisch zu bestimmen, indem der Gasstrom einmal unter Anwendung der Voroxidation (Messung der Summe aus $NO_2$ und demaus NO gebildeten $NO_2$) und zum anderen ohne Voroxidation (Messung des $NO_2$ ohne Reaktion des NO) gemessen wird. Aus der Differenz der beiden Messungen ergeben sich die jeweiligen Anteile von NO und $NO_2$ im Gasgemisch.

Die Erfindung betrifft auch generell einen Gassensor mit erhöhter Empfindlichkeit und hoher Lebensdauer aus einem piezoelektrischen Kristall, bei dem die Oberfläche des Kristalls mit einem porösen Polymer versehen ist, ein Verfahren zu dessen Herstellung, sowie die Verwendung des Sensors zum Nachweis von Ozon oder Stickoxid ($NO_x$). Die porösen Polymerschichten können auch als aktives Bestandteil bei Sensoren mit einem anderen Funktionsprinzip eingesetzt werden.

Durch die Verwendung einer porösen Polymerschicht bei Sensoren werden eine höhere Empfindlichkeit und längere Standzeit der Sensoren erhalten.

Eine poröse Polymer-Schicht oder Beschichtung kann auf zwei Arten hergestellt werden. Dies wird beispielhaft für einen Schwingquarz gezeigt.

Beschichtungsverfahren a.)

In einem ersten Schritt wird der Schwingquarz in eine Lösung des für die Gasanalyse verwendeten Polymers und anschließend im zweiten Schritt in ein Nichtlösemittel eingetaucht, bis weitgehend alles Lösemittel durch Nichtlösemittel ersetzt ist. Dann wird das Nichtlösemittel durch Trocknen entfernt.

Es können alle Lösemittel verwendet werden, die das Polymer lösen. Als Nichtlösemittel eignen sich bevorzugt Substanzen, die mit dem Lösemittel gut mischbar sind. Dies bewirkt eine schnelles Ersetzen des Lösemittels durch das Nichtlösemittel (Phaseninversion), was zu sehr porösen Oberflächen führt. Eine bevorzugte Lösemittel / Nichtlösemittel-Kombination ist beispielweise N-Methylpyrrolidon / Wasser oder Tetrahydrofuran / Aceton.

Beschichtungsverfahren b.)

In einem ersten Belegungsschritt wird der Schwingquarz in eine Lösung eines Polymers, das eine starke Adhäsionswirkung besitzt, getaucht. Nach dem Trocknen des Quarzes wird dieser in einem zweiten Belegungsschritt in eine Suspension aus porösen Partikeln des oxidierbaren aromatischen Polymers getaucht. Danach wird der Quarz wieder getrocknet. Hierbei ist es vorteilhaft die Temperatur gegen Ende des Trocknens zu erhöhen - beispielsweise auf ca. 10°C über die Glastemperatur des Polymers der adhäsiven Zwischenschicht - , um ein gute Adhäsion der Polymer-Partikel an dem im ersten Schritt aufgetragenen Polymer der adhäsiven Zwischenschicht zu erreichen.
Verwendbare Substanzen für die adhäsive Zwischenschicht sind alle Polymere, die eine gute Adhäsion an der Quarzoberfläche zeigen. Bevorzugt sind Polymere, die sich beim zweiten Trocknungsschritt über ihre Glastemperatur aufheizen lassen, so daß eine gute Verbindung der porösen Partikel auf dem Schwingquarz gewährleistet ist. Vorzugsweise können Polysiloxan, Polyacrylat, Polymethacrylat, Polystyrol, Polyisopren oder Polybutadien verwendet werden. Insbesondere eignen sich Polymere, die beim Aufheizen noch thermisch vernetzen und somit eine besonders gute Anhaftung der porösen Partikel bewirken, wie Polybutadien oder Polyisopren.

Die Herstellung der verwendeten porösen Partikel ist beispielsweise in der deutschen Patentanmeldung P 44 39 478.0, Titel "Filtermaterial auf Polymerbasis zur Entfernung von Komponenten aus Gasen und Flüssigkeiten", eingereicht am 8. Nov. 1994 beschrieben, auf die hiermit Bezug genommen wird.

Poröse oder unporöse Schichten der oxidierbaren aromatischen Polymere eignen sich besonders zur Herstellung von Sensoren für Ozon oder Stickstoffdioxid.

Die Sensoren gemäß der Erfindung können beispielsweise im Bereich des Arbeitsschutzes, bei Immissions- und Emmissionsmessungen sowie als Filterwächter eingesetzt werden.

Die Sensoren gemäß der Erfindung arbeiten in einem weiten Temperaturbereich. Im allgemeinen liegt der Temperaturbereich bei -10 bis 100°C, insbesondere bei -10 bis 50°C. Höhere Arbeitstemperaturen sind möglich. Eine Thermostatisierung der Sensoren ist nicht erforderlich.

Beispiele:

1) Kommerzielle HC-18U Quarze (Grundfrequenz: 11,5 MHz) wurden aus ihrem Schutzgehäuse gelötet und in eine 1 %ige Lösung von PPO in Chloroform getaucht. Anschließend wurde der Sensor bei 70°C für 5 Stunden unter vermindertem Druck getrocknet. Die Schwingungsfähigkeit des beschichteten Sensors wurde mit einem transistorisierten Oszillator, der Schwingquarze bei 0,1 bis 30 MHz in Parallelresonanz schwingen läßt, und einem 10 MHz Frequenzzähler (Auflösung 0,1 Hz) mit zuschaltbarem Vorteiler und thermostatisierter Torzeitbasis getestet.
Belegung mit PPO: 32,9 µg (9398 Hz)
$NO_2$-Konzentration: 600 ppm $NO_2$ in Helium
Strömungsgeschwindigkeit: ~ 100 l/h

| Zeit[min] | 0 | 1 | 4 | 5 | 8 | 9 | 12 | 16 | 20 | 21 |
|---|---|---|---|---|---|---|---|---|---|---|
| Δf [Hz] | 0 | 2 | 6 | 14 | 60 | 80 | 124 | 168 | 202 | 210 |

| Zeit[min] | 24 | 29 | 33 | 37 | 45 | 49 | 57 | 72 | 92 | 132 |
|---|---|---|---|---|---|---|---|---|---|---|
| Δf [Hz] | 230 | 258 | 282 | 300 | 336 | 352 | 380 | 426 | 476 | 558 |

2) Beispiel 1 wurde wiederholt mit folgenden Kenndaten:
Belegung mit PPO: 111,2 µg (31764 Hz)
$NO_2$-Konzentration: 600 ppm $NO_2$ in Helium
Strömungsgeschwindigkeit: ~100 l/h

| Zeit[min] | 0 | 1 | 4 | 5 | 8 | 9 | 12 | 16 | 20 | 21 |
|---|---|---|---|---|---|---|---|---|---|---|
| Δf [Hz] | 0 | 2 | 4 | 32 | 194 | 236 | 302 | 362 | 405 | 416 |

| Zeit[min] | 24 | 29 | 33 | 37 | 45 | 49 | 57 | 72 | 92 | 132 |
|---|---|---|---|---|---|---|---|---|---|---|
| Δf [Hz] | 436 | 468 | 488 | 504 | 532 | 542 | 564 | 598 | 638 | 700 |

3) Beispiel 1 wurde wiederholt mit folgenden Kenndaten:
Belegung mit PPO: 18,2 µg (5196 Hz)
$O_3$-Konzentration: 100 ppb in Luft
Strömungsgeschwindigkeit: ~ 100 l/h

| Zeit[min] | 0 | 21 | 30 | 44 | 60 | 120 | 155 | 238 | 380 |
|---|---|---|---|---|---|---|---|---|---|
| Δf [Hz] | 0 | 2 | 4 | 6 | 10 | 20 | 26 | 38 | 60 |

| Zeit[min] | 470 | 600 | 680 | 770 | 830 | 905 | 1010 |
|---|---|---|---|---|---|---|---|
| Δf [Hz] | 70 | 82 | 90 | 98 | 104 | 110 | 118 |

Die Beispiele zeigen, daß sowohl $NO_2$ als auch Ozon durch einen Sensor, der einen Polyarylenether enthält, nahezu linear nachgewiesen werden.

4) Kommerzielle HC-18 U Quarze (Grundfrequenz: 11,5 MHz) wurden aus ihrem Schutzgehäuse gelötet und in eine 1 %ige Lösung von PPS in Isochinolin getaucht. Anschließend wurde der Sensor bei 70 °C für 5 Stunden unter vermindertem Druck getrocknet, Belegung mit PPS: 21,1 µg. Die Schwingungsfähigkeit des beschichteten Sensors wurde mit einem transistorisierten Oszillator, der Schwingquarze bei 0,1 bis 30 MHz in Parallelresonanz schwingen läßt, und einem 10 MHz Frequenzzähler (Auflösung 0,1 Hz) mit zuschaltbarem Vorteiler und thermostatisierter Torzeitbasis getestet. Der Sensor wurde mit einem $NO_2$-haltigen Gasstrom in Kontakt gebracht. $NO_2$-Konzentration: 600 ppm $NO_2$ in Helium, Strömungsgeschwindigkeit: - 100 l/h

| Zeit[min] | 0 | 20 | 25 | 31 | 37 | 41 | 47 | 51 | 58 | 63 |
|---|---|---|---|---|---|---|---|---|---|---|
| Δf [Hz] | 0 | 74 | 84 | 90 | 100 | 112 | 120 | 126 | 140 | 144 |

| Zeit[min] | 68 | 78 | 88 | 98 | 108 | 128 | 158 | 188 | 218 | 267 |
|---|---|---|---|---|---|---|---|---|---|---|
| Δf [Hz] | 152 | 162 | 178 | 196 | 208 | 240 | 274 | 304 | 330 | 450 |

Das Beispiel zeigt, daß $NO_2$ durch den Sensor, der ein schwefelhaltiges Polymer enthält, nahezu linear nachweisbar ist.

5) Sensor mit poröser Beschichtung nach Methode a.)

Kommerzielle Quarze wurden aus ihrem Schutzgehäuse entfernt und in eine 1 %ige Lösung (Sensor 1) sowie in eine 5 %ige Lösung (Sensor 2) von PPO in N-Methylpyrrolidon (NMP) getaucht. Anschließend wurden die Quarze, an deren Oberfläche ein Film der NMP-Lösung anhaftet, direkt in destilliertes Wasser eingetaucht. Nach einer Minute wurde der Quarz wieder herausgenommen und getrocknet, anschließend auf Schwingfähigkeit kontrolliert und die neue Schwingfrequenz gemessen. Aus der Frequenzdifferenz wurde mit der Sauerbrey-Gleichung (s. S. 2) die Belegungsmasse bestimmt.

Die Quarze wurden in einer Küvette mit einem Ozon-haltigen Gasstrom überströmt. Die Frequenzänderung wurde direkt mit einem transistorisiertem Oszillator, der Schwingquarze zwischen 0,1 und 30 MHz in Parallelresonanz schwingen läßt, und einem 10 MHz Frequenzzähler mit zuschaltbarem Vorteiler und thermostatisierter Torzeitbasis getestet.

Beispiel 5.1: Sensor mit poröser Schicht

Belegung mit PPO: 19,23 µg
Ozonkonzentration: 500 ppb
Strömungsgeschwindigkeit: - 100 l/h

| Zeit [min] | 200 | 450 | 600 | 750 | 840 | 900 | 1200 | 1500 | 1800 | 2100 | 2520 | 3000 | 3300 | 3600 | 3900 |
|---|---|---|---|---|---|---|---|---|---|---|---|---|---|---|---|
| Δf [Hz] | 84 | 132 | 180 | 228 | 264 | 284 | 368 | 476 | 568 | 672 | 812 | 976 | 108 | 1164 | 1276 |

Beispiel 5.2: Sensor mit poröser Schicht

Belegung mit PPO: 117,83 µg
Ozonkonzentration: 500 ppb
Strömungsgeschwindigkeit: ~ 100 l/h

| Zeit [min] | Δf [Hz] |
|---|---|
| 200 | 304 |
| 450 | 640 |
| 600 | 756 |
| 750 | 932 |
| 840 | 1004 |
| 900 | 1048 |
| 1200 | 1268 |
| 1500 | 1428 |
| 1800 | 1572 |
| 2100 | 1740 |
| 2520 | 1968 |
| 3000 | 2216 |
| 3300 | 2344 |
| 3600 | 2468 |
| 3900 | 2588 |

6) Sensor mit porösen Partikeln nach Methode b.)
Kommerzielle Quarze wurden aus ihrem Schutzgehäuse entfernt und in eine 1% Lösung von Polybutadien in Toluol getaucht. Anschließend wurden die Quarze getrocknet und die Frequenzänderung gemessen. Daraufhin wurden die mit der dünnen Polybutadienschicht versehenen Sensoren bei 25°C in eine 1 %ige Suspension von PPS in 1-Methoxynaphthalin getaucht und die Quarze wieder getrocknet. Nach dem Verdampfen des Lösungsmittels wurde die Temperatur für ca. 30 Minuten auf 100°C erhöht und die Frequenzänderung erneut gemessen.
Die beschichteten Quarze wurden in einer Küvette mit einem Ozon-haltigen Gasstrom überströmt. Die Frequenzänderung wurde direkt mit einem transistorisiertem Oszillator, der Schwingquarze zwischen 0,1 und 30 MHz in Parallelresonanz schwingen läßt, und einem 10 MHz Frequenzzähler mit zuschaltbarem Vorteiler und thermostatisierter Torzeitbasis getestet.

Beispiel 6.1: Sensor mit porösen Partikeln

Belegung mit Polybutadien: 4,3 µg
Belegung mit PPS: 35,16 µg
Ozonkonzentration: 100 ppb
Strömungsgeschwindigkeit: ~ 100 l/h

| Zeit [min] | 0 | 3 | 8 | 11 | 19 | 42 | 70 | 98 | 120 | 149 | 190 | 213 | 254 | 284 | 301 |
|---|---|---|---|---|---|---|---|---|---|---|---|---|---|---|---|
| Δf [Hz] | 0 | 4 | 20 | 28 | 54 | 118 | 188 | 242 | 282 | 332 | 402 | 448 | 494 | 522 | 536 |

Beispiel 6.2: Sensor mit porösen Partikeln

Belegung mit Polybutadien: 2,26 µg
Belegung mit PPS: 33,74 µg
Ozonkonzentration: 200 ppb
Strömungsgeschwindigkeit: - 100 l/h

| Zeit [min] | 0 | 3 | 4 | 5 | 7 | 10 | 13 | 15 | 20 | 25 | 31 | 40 | 45 | 46 | 47 |
|---|---|---|---|---|---|---|---|---|---|---|---|---|---|---|---|
| Δf [Hz] | 0 | 20 | 35 | 50 | 72 | 96 | 132 | 144 | 168 | 196 | 220 | 248 | 256 | 262 | 270 |

Beispiel 6.3: Sensor mit porösen Partikeln

Belegung mit Polybutadien: 1,92 µg
Belegung mit PPS: 20,82 µg
Ozonkonzentration: 1 ppm
Strömungsgeschwindigkeit: ~ 100 l/h

| Zeit [min] | 0 | 2 | 3 | 5 | 7 | 10 | 12 | 15 | 17 | 20 | 25 | 30 | 40 | 50 | 60 |
|---|---|---|---|---|---|---|---|---|---|---|---|---|---|---|---|
| Δf [Hz] | 0 | 76 | 142 | 220 | 304 | 380 | 428 | 492 | 520 | 554 | 596 | 630 | 678 | 712 | 734 |

Die oben aufgeführten Beispiele zeigen, daß mit zunehmender Konzentration eine zunehmende Frequenzänderung beobachtet werden kann und selbst Konzentrationen von 100 ppb (Beispiel 6.1) noch gut erfaßt werden können. Außerdem zeigt sich eine sehr hohe Lebensdauer (Beispiel 5.1 und 5.2: 3900 min).

**Patentansprüche**

1. Sensor zur Bestimmung von Ozon, Stickstoffdioxid, Stickoxiden, Wasserstoffperoxid oder anorganischen oder

organischen Peroxiden oder Persäuren, dadurch gekennzeichnet, daß der Sensor aus einem piezoelektrischen Kristall besteht, der mit einer porösen oder unporösen Beschichtung versehen ist, die mindestens ein oxidierbares aromatisches Polymer enthält, das ein Polyarylenether oder ein Polyarylenthioether ist.

**2.** Sensor nach Anspruch 1, dadurch gekennzeichnet, daß das oxidierbare aromatische Polymer ein lineares oder verzweigtes Polyphenylensulfid oder Poly-p-(2,6-Dimethylphenylenoxid) ist.

**3.** Sensor nach Anspruch 1 oder 2, dadurch gekennzeichnet, daß vor der Beschichtung eine Zwischenschicht auf die Sensoroberfläche aufgebracht wird, die ein Polymer mit olefinischen Seitengruppen oder Polybutadien, Polyisopren, Polyacrylat, Polymethacrylat, Polystyrol oder Polysiloxan enthält.

**4.** Sensor nach einem oder mehreren der Ansprüche 1 bis 3, dadurch gekennzeichnet, daß die Sensoroberfläche eine Zwischenschicht und eine Schicht mit porösen Polymer-Partikeln aufweist.

**5.** Sensor nach einem oder mehreren der Ansprüche 1 bis 4, dadurch gekennzeichnet, daß als piezoelektrischer Kristall ein Erdalkalititanat, Bleizirkoniumtitanat oder Quarz eingesetzt wird.

**6.** Verfahren zur Herstellung eines Gassensors aus einem piezoelektrischen Kristall, dessen Oberfläche mit einem porösen Polymer versehen ist, dadurch gekennzeichnet, daß

a) der Kristall zuerst in eine Lösung des für die Gasanalyse verwendeten Polymern, anschließend in ein Nichtlösemittel getaucht wird, bis weitgehend alles Lösemittel durch Nichtlösemittel ersetzt ist und dann das Nichtlösemittel durch Trocknen entfernt wird, wobei das Polymer in poröser Form auf der Oberfläche des Kristalls verbleibt, oder
b) der Kristall folgenden Verfahrensschichten unterworfen wird:

1) Eintauchen in eine Lösung eines Polymers, das eine starke Adhäsionswirkung besitzt,
2) Trocknung,
3) Eintauchen in eine Suspension aus porösen Partikeln des für die Gasanalyse verwendeten Polymers und
4) Trocknung,

wobei die porösen Partikel über eine Zwischenschicht mit dem Kristall verbunden werden.

**7.** Verfahren nach Anspruch 6, dadurch gekennzeichnet, daß die Zwischenschicht ein Polybutadien, Polyisopren, Polyacrylat, Polymethacrylat, Polystyrol, Polysiloxan oder ein Polymer mit olefinischen Seitenketten enthält.

**8.** Verwendung von einem Polyarylensulfid oder Polyarylenether als aktiver Bestandteil von Sensoren.

**9.** Verwendung nach Anspruch 8 zur Herstellung von Sensoren für Ozon, Stickstoffdioxid, Stickoxide, Wasserstoffperoxid oder Persäuren.

## Claims

**1.** A sensor for determining ozone, nitrogen dioxide, oxides of nitrogen, hydrogen peroxide or inorganic or organic peroxides or per acids, which comprises a piezoelectric crystal which is provided with a porous or nonporous coating which comprises at least one oxidizable aromatic polymer which is a polyarylene ether or a polyarylene thioether.

**2.** The sensor as claimed in claim 1, wherein the oxidizable aromatic polymer is a linear or branched polyphenylene sulfide or poly-p-(2,6-dimethylphenylene oxide).

**3.** The sensor as claimed in claim 1 or 2, wherein an intermediate layer which comprises a polymer having pendant olefinic groups or polybutadiene, polyisoprene, polyacrylate, polymethacrylate, polystyrene or polysiloxane is applied to the sensor surface prior to coating.

**4.** The sensor as claimed in one or more of claims 1 to 3, wherein the sensor surface has an intermediate layer and

a layer having porous polymer particles.

5. The sensor as claimed in one or more of claims 1 to 4, wherein the piezoelectric crystal used is an alkaline earth metal titanate, lead zirconium titanate or quartz.

6. A process for the preparation of a gas sensor from a piezoelectric crystal whose surface is provided with a porous polymer, wherein

   a) the crystal is first immersed in a solution of the polymer used for the gas analysis and then in a nonsolvent until substantially all solvent has been replaced by nonsolvent, and the nonsolvent is then removed by drying, the polymer remaining in porous form on the surface of the crystal, or
   b) the crystal is subjected to the following process steps:

      1) immersion in a solution of a polymer which has a strong adhesive action,
      2) drying,
      3) immersion in a suspension of porous particles of the polymer used for the gas analysis and
      4) drying,

   the porous particles being bonded to the crystal via an intermediate layer.

7. The process as claimed in claim 6, wherein the intermediate layer comprises a polybutadiene, polyisoprene, polyacrylate, polymethacrylate, polystyrene, polysiloxane or a polymer having pendant olefinic chains.

8. The use of a polyarylene sulfide or polyarylene ether as an active component of sensors.

9. The use as claimed in claim 8 for the preparation of sensors for ozone, nitrogen dioxide, oxides of nitrogen, hydrogen peroxide or per acids.

## Revendications

1. Capteur pour la détermination d'ozone, de dioxyde d'azote, d'oxydes d'azote, de peroxyde d'hydrogène ou de peroxydes inorganiques ou organiques ou de persels, caractérisé en ce que le capteur consiste en un cristal piézo-électrique, muni d'un revêtement poreux ou non poreux comprenant au moins un polymère aromatique oxydable qui est un polyarylène-éther ou un polyarylène-thioéther.

2. Capteur selon la revendication 1, caractérisé en ce que le polymère aromatique oxydable est un polysulfure de phénylène linéaire ou ramifié ou un poly-p-(2,6-diméthylphényloxyde).

3. Capteur selon la revendication 1 ou 2, caractérisé en ce que, avant le revêtement, on applique sur la surface du capteur une couche intermédiaire comprenant un polymère présentant des groupements latéraux oléfiniques ou un polybutadiène, polyisoprène, polyacrylate, polyméthacrylate, polystyrène ou polysiloxane.

4. Capteur selon l'une ou plusieurs des revendications 1 à 3, caractérisé en ce que la surface du capteur comporte une couche intermédiaire et une couche comprenant des particules polymériques poreuses.

5. Capteur selon l'une ou plusieurs des revendications 1 à 4, caractérisé en ce qu'on utilise comme cristal piézo-électrique un titanate alcalino-terreux, un titanate de plomb-zirconium ou du quartz.

6. Procédé pour la fabrication d'un capteur de gaz à base d'un cristal piézo-électrique dont la surface est munie d'un polymère poreux, caractérisé en ce que

   a) le cristal est d'abord immergé dans une solution de polymère utilisé pour l'analyse du gaz, puis dans un non-solvant, jusqu'à ce que tout le solvant ait été substantiellement remplacé par le non-solvant, et ensuite le non-solvant est éliminé par séchage, ce qui laisse le polymère à la surface du cristal sous forme poreuse, ou
   b) le cristal est soumis aux étapes de procédé suivantes :

      1) immersion dans une solution d'un polymère possédant un effet adhésif marqué,

2) séchage,
3) immersion dans une suspension de particules poreuses du polymère utilisé pour l'analyse du gaz,
4) séchage,

les particules poreuses étant liées au cristal par l'intermédiaire d'une couche intermédiaire.

**7.** Procédé selon la revendication 6, caractérisé en ce que la couche intermédiaire contient un polybutadiène, polyisoprène, polyacrylate, polyméthacrylate, polystyrène, polysiloxane ou un polymère comportant des groupements latéraux oléfiniques.

**8.** Utilisation d'un polysulfure d'arylène ou d'un polyarylène-éther comme constituant actif de capteurs.

**9.** Utilisation, selon la revendication 8, pour la fabrication de capteurs d'ozone, de dioxyde d'azote, d'oxydes d'azote, de peroxyde d'hydrogène ou de persels.